# EUROPÄISCHE PATENTSCHRIFT

(11) **EP 0 830 798 B1**
(45) Veröffentlichungstag und Bekanntmachung des Hinweises auf die Patenterteilung: **26.09.2001**
(21) Anmeldenummer: 96915971.4
(22) Anmeldetag: 05.06.1996
(51) Int. Cl.: H04Q 11/00

(54) **BLOCKIERUNGSFREIE MULTICAST WDM-KOPPELANORDNUNG**
NON-BLOCKING MULTI-CAST WDM COUPLING ARRANGEMENT
SYSTEME DE COUPLAGE POUR MULTIPLEXAGE PAR REPARTITION EN LONGUEUR D'ONDE A DIFFUSION SELECTIVE SANS BLOCAGE

(30) Priorität: 08.06.1995 DE 19520976
(43) Veröffentlichungstag der Anmeldung: 25.03.1998
(73) Patentinhaber: SIEMENS AKTIENGESELLSCHAFT, 80333 München (DE)
(72) Erfinder: HUBER, Manfred, D-82166 Gräfelfing (DE); OSBORNE, Robert, D-81371 München (DE)
(86) Internationale Anmeldenummer: DE9600990
(87) Internationale Veröffentlichungsnummer: WO9642180

(56) Entgegenhaltungen:
- IEICE TRANSACTIONS ON COMMUNICATIONS, Bd. E77B, Nr. 10, Oktober 1994, TOKYO JP, Seiten 1220-1229, XP000492774 WATANABE ET AL.: "Optical path cross-connect node architecture with high modularity for photonic transport networks"
- 19TH EUROPEAN CONFERENCE ON OPTICAL COMMUNICATION, Bd. 2, 12. - 16.September 1993, MONTREUX CH, Seiten 125-128, XP000492187 DEPOVERE ET AL.: "A flexible cross-connect network using multiple optical carriers"
- INTERNATIONAL SWITCHING SYMPOSIUM, Bd. 3, 28.Mai 1990, STOCKHOLM SE, Seiten 21-26, XP000130869 HILL ET AL.: "A distributed wavelength switching architecture for the TPON local network"
- JOURNAL OF LIGHTWAVE TECHNOLOGY, Bd. 10, Nr. 2, Februar 1992, NEW YORK US, Seiten 265-272, XP000267498 SHIMAZU ET AL.: "Ultrafast photonic ATM switch with optical output buffers"

## Beschreibung

Sogenannte optische cross-connects ermöglichen eine wahlfreie, semipermanente Durchschaltung von optischen WDM-(Wavelength Division Multiplex)-Signalen.

Der Anmeldungsgegenstand betrifft eine Koppelmatrix zur wahlfreien Durchschaltung von auf Wellenleitern ankommenden optischen Signalen mit jeweils gegebener Wellenlänge auf Ausgangswellenleiter bei der
- die auf den Eingangswellenleitern ankommenden optischen Signale über eine mehrstufige Raumkoppelanordnung in Richtung auf einen gewünschten Ausgangswellenleiter durchschaltbar sind,
- die Raumkoppelanordnung eine Eingangsstufe und eine Ausgangsstufe aufweist,
- eine Mehrzahl von von der Ausgangsstufe abgegebenen optischen Signalen, die in Richtung des Ausgangswellenleiters durchgeschaltet sind, in einem signalindividuellen Wellenlängenumsetzer in optische Signale fester, untereinander unterschiedlicher Wellenlänge umsetzbar sind.

Eine Anordnung, die die oben angegebenen Merkmale aufweist, ist aus International Conference on Communications (ICC) 1993, Genf, 'Optical Path Layer Technologies to enhance B-ISDN Integrity' bekannt. Bei dieser Anordnung, die ausschließlich mit Raumschaltern gebildet ist, ist in der Eingangsstufe prinzipbedingt lediglich eine auswählende Durchschaltung nicht aber eine mehrfache Verteilung eines einzelnen optischen Signales möglich.

Aus IEICE TRANSACTIONS ON COMMUNICATIONS, Bd. E 77b, Nr. 10, Oktober 1994, TOKYO JP, S. 1220 - 1229, WATANABE et al :" Optical path cross-connect node with high modularity for photonic transport networks" ist eine optische WDM - Durchschalteeinrichtung OXC VWP (optical path cross-connect node virtual wavelength path) bekannt, bei der an jedem Eingang der Eingangsstufe eine Wellenlängen-Umsetzung erfolgt.

Dem Anmeldungsgegenstand liegt das Problem zugrunde, die eingangs umrissene Koppelanordnung derart weiterzubilden, daß neben einer Durchschaltbarkeit eines ankommenden optischen Signales mit einer gegebenen Wellenlänge auf einen beliebigen Ausgangswellenleiter als optisches Signal mit einer beliebigen Wellenlänge eine Durchschaltbarkeit eines beliebigen optischen Signales beliebiger Wellenlänge auf mehrere Ausgangswellenleiter als mehrere optische Signale gleicher oder unterschiedlicher Wellenlänge oder auf einen Ausgangswellenleiter als mehrere optische Signale unterschiedlicher Wellenlänge gegeben ist.

Das Problem wird dadurch gelöst, daß die Eingangsstufe mit 1-x-m-Schaltelementen, deren Ausgänge unabhängig voneinander schaltbar sind, gebildet ist und dem mit "1" bezeichneten Anschluß einer 1-x-m-Schaltmatrix ein ankommendes optisches Signal mit genau einer Wellenlänge zugeführt ist.

Der Anmeldungsgegenstand, dessen 1-x-m-Schaltelemente durch die Vermeidung von bei Raumschaltern erforderlichen Kombinierern prinzipiell ein verringertes Nebensprechen und eine verringerte Dämpfung aufweisen, bringt eine Multicast-Möglichkeit eines auf einem Wellenleiter zugeführten optischen Signales auf eine Mehrzahl von Ausgangswellenleitern mit sich, wobei solange Blockierungsfreiheit gegeben ist, als auf den Ausgangswellenleitern eine ausreichende Anzahl von durch Wellenlängen gegebenen Kanälen vorhanden sind.

Gemäß einer besonderen Weiterbildung des Anmeldungsgegenstandes sind/ist eine 1-x-m-Schaltmatrix und/oder ein Raumschalter der mittleren Stufe mit einer Mehrzahl von unabhängig voneinander ansteuerbaren Halbleiterverstärkerschaltern gebildet. Diese Maßnahme bringt - beispielsweise im Multicastbetrieb - eine Aktivierbarkeit mehrerer Ausgänge einer 1-x-m-Schaltmatrix und/oder eines Raumschalters mit einer von dem Verteilverhältnis unabhängigen Leistungshöhe an den einzelnen Ausgängen mit sich, womit die Leistungsunterschiede zwischen den optischen Signalen an den Ausgängen der Raumkoppelanordnung verringert sind.

Der Anmeldungsgegenstand wird nun als Ausführungsbeispiel in einem zum Verständnis erforderlichen Umfang anhand von Figuren näher beschrieben, wobei gleichwirkende Teile mit gleichen Bezeichnungen versehen sind. Dabei zeigen:
- Fig 1: eine prinzipielle Darstellung einer ersten Ausführungsform der anmeldungsgemäßen Koppelanordnung
- Fig 2: eine prinzipielle Darstellung einer zweiten Ausführungsform der anmeldungsgemäßen Koppelanordnung
- Fig 3: eine Darstellung einer aus dem Stand der Technik bekannten Koppelanordnung.
- Fig 4: eine prinzipielle Darstellung eines mit optischen Halbkeiterverstärkern gebildeten 1-x-m-Schaltelementes
- Fig 5: eine prinzipielle Darstellung einer mit optischen Halbleiterverstärkern gebildeten

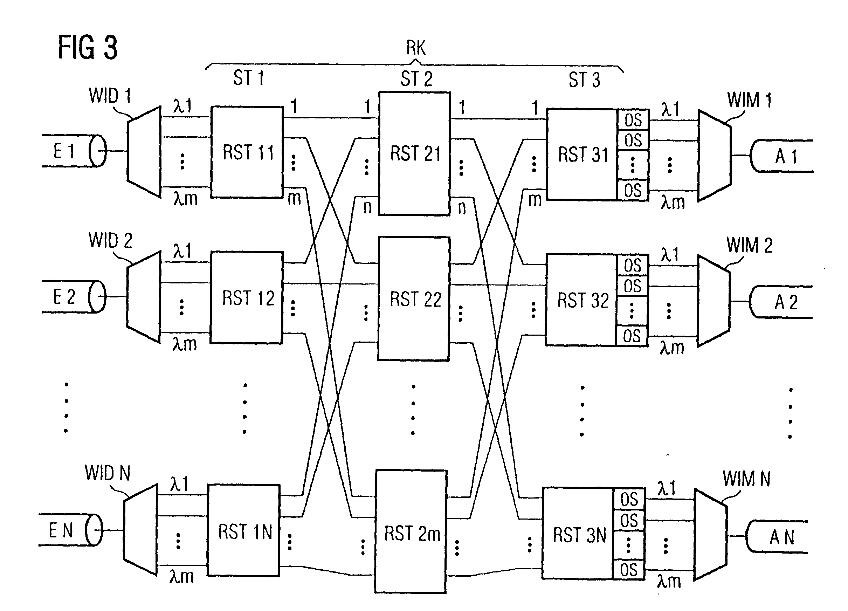

Fig 3 zeigt eine aus dem eingangs erwähnten Dokument bekannte Koppelanordnung zur wahlfreien Durchschaltung von auf Eingangswellenleitern E1..EN ankommenden optischen Signalen auf Ausgangswellenleiter A1..AN. Die Eingangswellenleiter führen jeweils eine Mehrzahl von optischen Signalen mit untereinander unterschiedlichen Wellenlängen einem zugehörigen Wellenlängendemultiplexer WID 1 ..WID N zu. Der Wellenlängendemultiplexer führt die optischen Signale für jede Wellenlänge λ₁ .. λₘ gesondert einem Wellenleiter zu. Die ein optisches Signal mit genau einer Wellenlänge führenden Wellenleiter sind mit den Eingängen eines Raumschalters RST 11 .. RST 1N verbunden. Die Raumschalter RST 11 .. RST 1N sind in der Eingangsstufe ST1 einer mit der Eingangsstufe, einer mittleren Stufe ST2 und einer Ausangsstufe ST3 gebildeten Raumkoppelanordnung RK angeordnet. Die Raumschalter RST 11 .. RST 1N vermögen ein an einem Eingang zugeführtes optisches Signal auf eines von mehreren Ausgängen 1..m durchzuschalten. Die Raumschalter weisen intern an ihren Ausgängen ausgangsindividuelle Kombinierer auf. Die Ausgänge eines Raumschalters RST 11 .. RST 1N sind jeweils mit einem Eingang 1..n verschiedener Raumschalter RST 21 .. RST 2m der mittleren Stufe verbunden. Die Raumschalter RST 21 .. RST 2m vermögen ein an einem Eingang zugeführtes optisches Signal auf einen von mehreren Ausgängen 1..n durchzuschalten. Die Ausgänge eines Raumschalters RST 21 .. RST 2m sind jeweils mit einem Eingang 1..m verschiedener Raumschalter RST 31 .. RST 3N der Ausgangsstufe verbunden. Die Raumschalter RST 31 .. RST 3N vermögen ein an einem Eingang zugeführtes optisches Signal auf eines von mehreren Ausgängen 1..m durchzuschalten. Mit jedem der Ausgäge eines Raumschalters RST 31 .. RST 3N ist ein Wellenlängenumsetzer OS verbunden. Die mit einem Raumschalter RST 31 .. RST 3N verbundenen Wellenlängenumsetzer setzen die von dem Raumschalter abgegebenen optischen Signale in optischen Signale mit untereinander unterschiedlicher Wellenlänge λ₁ .. λₘ um. Die von einem Raumschalter RST 31 .. RST 3N abgegebenen optischen Signale mit untereinander unterschiedlichen Wellenlängen werden über einen Wellenlängenmultiplexer WIM einem dem Raumschalter zugeordneten Ausgangswellenleiter zugeführt.

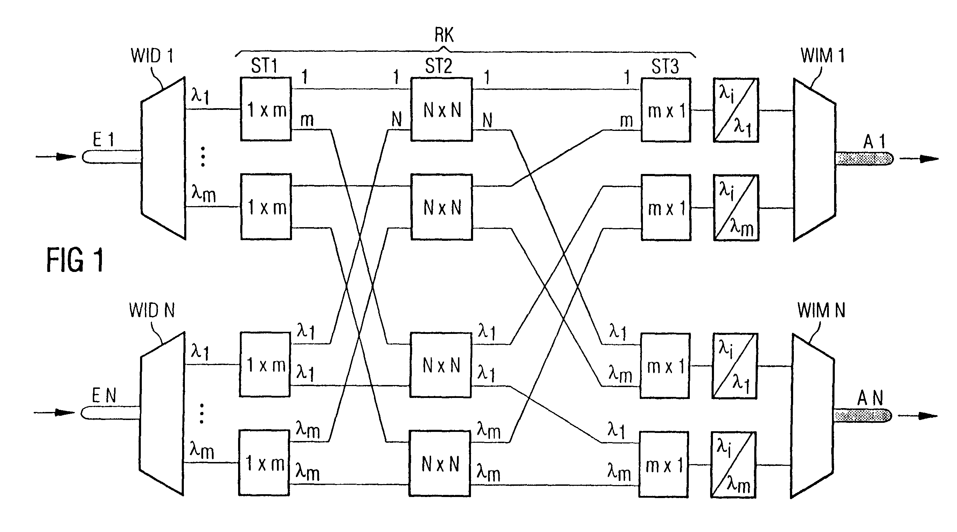

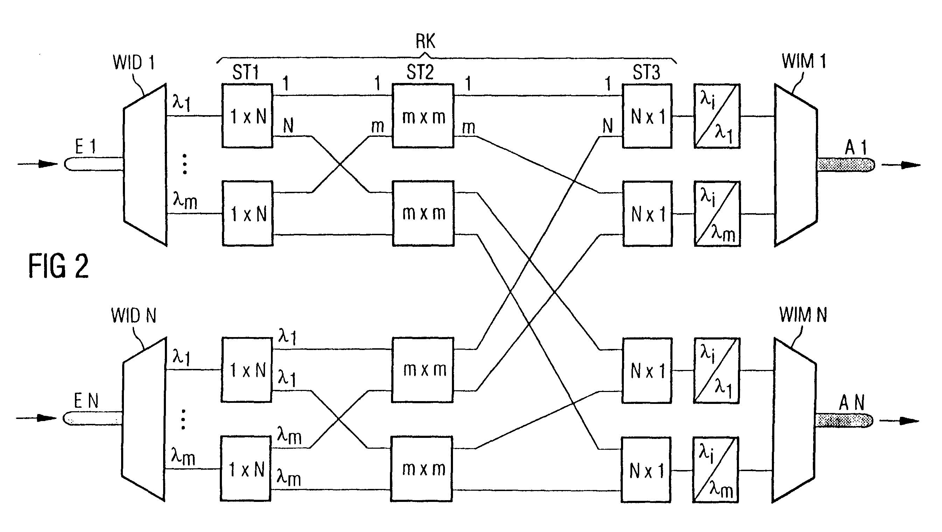

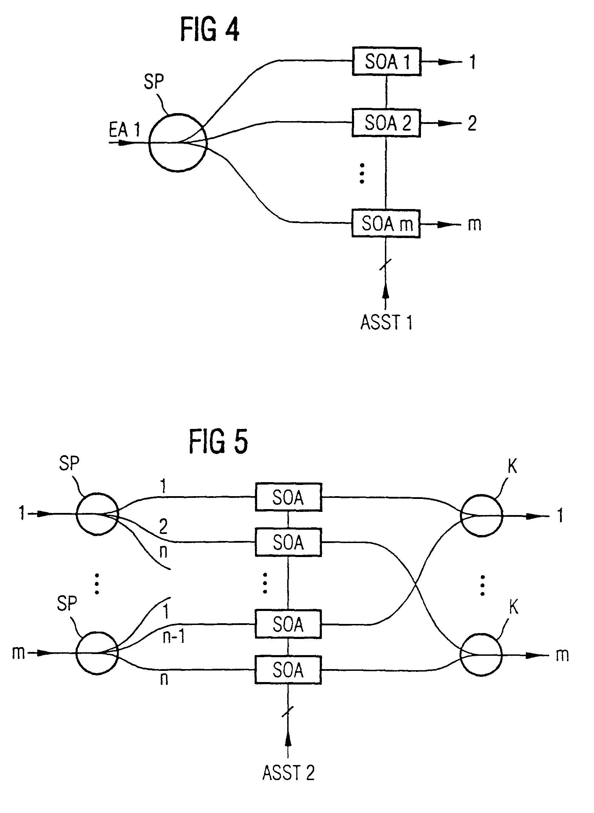

Bei den anmeldungsgemäßen Koppelanordnungen nach Fig 1 und Fig 2 sind in der Eingangsstufe und in der Ausgangsstufe im Unterschied zu der bekannten Koppelanordnung nach Fig 3 anstelle von Raumkopplern mit mehreren Eingängen und mehreren Ausgängen 1-x-m-Schaltmatrizen angeordnet. Bei einem Anmeldungsgegenstand sind nur in der Eingangsstufe der Raumkoppelanordnung 1-x-m-Schaltmatrizen angeordnet. Bei einem weiteren Anmeldungsgegenstand sind in der Eingangsstufe der Raumkoppelanordnung 1-x-m-Schaltmatrizen und in der Ausgangsstufe m-x-1-Schaltmatrizen angeordnet. In der Eingangsstufe ist jeder Wellenleiter, der ein optisches Signal mit genau einer Wellenlänge führt, mit dem mit "1" bezeichneten Anschluß einer 1-x-m-Schaltmatrix verbunden. Die 1-x-m-Schaltmatrix nach Fig 4 ist mit einem Splitter SP gebildet, der ein eingangsseitig zugeführtes optisches Signal ausgangsseitig einer Mehrzahl von an sich bekannten Halbleiterverstärkerschaltern SOA1 .. SOAm (Semiconductor Optical Amplifier) zuführt. Durch von außen zugeführte Ansteuersignale ASST1 mögen die von den Halbleiterverstärkerschaltern an ihren Ausgängen abgegebenen optischen Signale ein- und ausschaltbar sein. Eine 1-x-m-Schaltmatrize vermag also das an dem mit "1" bezeichneten Anschluß zugeführte optische Signal nach Maßgabe der von außen zugeführten Ansteuersignale auf nur eines, auf mehrere oder auf sämtliche Ausgänge durchzuschalten.

Bei den anmeldungsgemäßen Raumkoppelanordnungen nach Fig 1 und Fig 2 sind die Raumschalter der mittleren Stufe gemäß Fig 5 jeweils mit Splitter SP, Halbleiterverstärkerschaltern SOA (Semiconductor Optical Amplifier) und Kombinierern K gebildet; dabei ist ein Splitter eingangsseitig mit einem Eingang des Raumschalters und ausgangsseitig mit n mehreren Halbleiterverstärkerschaltern verbunden; die Kombinierer sind ausgangsseitig mit einem Ausgang des Raumschalters verbunden; die Ausgänge der Halbleiterverstärkerschalter sind derart mit den Eingängen der Kombinierer verbunden, daß von jedem Eingang des Raumschalters zu jedem Ausgang des Raumschalters ein Durchschalteweg gegeben ist; die Anzahl der Halbleiterverstärkerschalter bemißt sich nach der Anzahl m der Eingänge bzw. der Ausgänge des Raumschalters zum Quadrat. Die einzelnen Halbleiterverstärkerschalter eines Raumschalters mögen durch von außen zugeführte Ansteuersignale ASST2 ein- bzw. ausschaltbar sein. Ein Raumschalter vermag also das an einem Eingang zugeführte optische Signal nach Maßgabe der von außen zugeführten Ansteuersignale auf nur eines, auf mehrere oder auf sämtliche einer Mehrzahl von Ausgängen durchzuschalten.

Bei den anmeldungsgemäßen Raumkoppelanordnungen nach Fig 1 und Fig 2 mag die Ausgangsstufe mit m-x-1-Schaltmatrizen bzw. mit n-x-1-Schaltmatrizen gebildet sein; dabei sind die m bzw. n Eingänge über einen Kombinierer dem Ausgang zugeführt.

Bei der ersten Ausführungsform nach Fig 1 weisen die 1-x-m-Schaltmatrizen der Eingangsstufe ebensoviele Ausgänge auf wie die Anzahl der Wellenlängen in einem Eingangswellenleiter E1..EN. Die mittlere Stufe ist mit einer der Anzahl der Wellenlängen zum Quadrat gleichenden Anzahl von Raumschaltern NxN, deren Anzahl von Eingängen und Ausgängen jeweils der Anzahl der Eingangswellenleiter oder der Anzahl der Ausgangswellenleiter gleicht, gebildet. Jeder Raumschalter der mittleren Stufe führt optische Signale einer einzigen Wellenlänge. Die Ausgänge der Raumschalter der mittleren Stufe sind mit den Eingängen von m-x-1-Schaltmatrizen der Ausgangsstufe verbunden.

Jedem Eingang einer m-x-1-Schaltmatrix ist ein optisches Signal mit einer zu den Wellenlängen der übrigen optischen Signale unterschiedlichen Wellenlänge zuführbar. Die m-x-1-Schaltmatrizen, deren Anzahl dem Produkt aus Anzahl der Eingangswellenleiter bzw. Anzahl der Ausgangswellenleiter und Anzahl der eingesetzten unterschiedlichen Wellenlängen gleicht, sind mit ihrem mit "1" bezeichneten Anschluß mit einem jeweiligen Wellenlängenumsetzer λᵢ/λ₁ .. λᵢ/λₘ verbunden. Bei dieser Ausführungsform erfolgt in der Eingangsstufe eine Zuordnung der Eingangswellenlänge auf eine bestimmte Ausgangswellenlänge. In der mittleren Stufe erfolgt eine Zuordnung der Eingangswellenlänge auf den gewünschten Ausgangswellenleiter. Im übrigen erfolgen bei dieser ersten Ausführungsform die Verbindungen zwischen der ersten und der mittleren Stufe sowie zwischen der mittleren und der Ausgangsstufe in einer Struktur, die in der Literatur als Müller'sche Baumstruktur bekannt geworden ist.

Bei der zweiten Ausführungsform nach Fig 2 weisen die 1-x-N-Schaltmatrizen der Eingangsstufe ebensoviele Ausgänge auf wie die Anzahl der Eingangswellenleiter E1..EN. Die mittlere Stufe ist mit einer der Anzahl der Eingangswellenleiter zum Quadrat gleichenden Anzahl von Raumschaltern mxm, deren Anzahl von Eingängen und Ausgängen jeweils der Anzahl der möglichen Wellenlängen gleicht, gebildet. Jeder Raumschalter der mittleren Stufe kann optischen Signale, die jeweils eine der möglichen Wellenlängen aufweisen, durchschalten. Die Ausgänge der Raumschalter der mittleren Stufe sind mit den Eingängen von N-x-1-Schaltmatrizen der Ausgangsstufe verbunden. Die N-x-1-Schaltmatrizen, deren Anzahl dem Produkt aus Anzahl der Eingangswellenleiter bzw. Anzahl der Ausgangswellenleiter und Anzahl der eingesetzten unterschiedlichen Wellenlängen gleicht, sind mit ihrem mit "1" bezeichneten Anschluß mit einem jeweiligen Wellenlängenumsetzer verbunden. Bei dieser Ausführungsform erfolgt in der Eingangsstufe eine Zuordnung der Eingangswellenlänge auf den gewünschten Ausgangswellenleiter. In der mittleren Stufe erfolgt eine Zuordnung der Eingangswellenlänge auf eine bestimmte Ausgangswellenlänge.

## Patentansprüche

1. Koppelmatrix zur wahlfreien Durchschaltung von auf Wellenleitern ankommenden optischen Signalen gegebener Wellenlänge λ₁ .. λₘ auf Ausgangswellenleiter A1..AN bei der
- die auf den Wellenleitern ankommenden optischen Signale über eine mehrstufige Raumkoppelanordnung in Richtung auf einen gewünschten Ausgangswellenleiter durchschaltbar sind,
- die Raumkoppelanordnung eine Eingangsstufe ST 1 und eine Ausgangsstufe ST 3 aufweist,
- mehrere, von der Ausgangsstufe abgegebene optische Signale, die in Richtung des Ausgangswellenleiters durchgeschaltet sind, in einem signalindividuellen Wellenlängenumsetzer λᵢ/ λ₁ .. λᵢ/λₘ in optische Signale fester, untereinander unterschiedlicher Wellenlänge umsetzbar sind,
**dadurch gekennzeichnet**,
- daß die Eingangsstufe mit 1-x-m-Schaltelementen gebildet ist, deren Ausgänge unabhängig voneinander schaltbar sind und
- dem mit "1" bezeichneten Anschluß einer 1-x-m-Schaltmatrix ein ankommendes optisches Signal mit genau einer Wellenlänge zugeführt ist.

2. Koppelmatrix nach Anspruch 1
**dadurch gekennzeichnet**,
ein Raumschalter einer mittleren Stufe eingangsseitig mit der Eingangsstufe und ausgangsseitig mit der Ausgangsstufe verbunden ist.

3. Koppelmatrix nach Anspruch 1 oder 2
**dadurch gekennzeichnet**,
eine 1-x-m-Schaltmatrix und/oder der Raumschalter mit einer Mehrzahl von ansteuerbaren Halbleiterverstärkerschaltern gebildet ist.

4. Koppelmatrix nach einem der vorstehenden Ansprüche
**dadurch gekennzeichnet**,
- daß auf einem Eingangswellenleiter E1..EN eine Mehrzahl von optischen Signalen mit untereinander unterschiedlichen Wellenlängen ankommen und
- über einen mit diesem Eingangswellenleiter verbundenen Wellenlängendemultiplexer WID einer Mehrzahl von 1-x-m Schaltmatrizen jeweils ein optisches Signal mit genau einer Wellenlänge zuführbar ist.

5. Koppelmatrix nach einem der vorstehenden Ansprüche
**dadurch gekennzeichnet, daß**
- die Ausgangsstufe mit m-x-1-Schaltmatrizen gebildet ist
- der mit "1" bezeichnete Anschluß einer m-x-1-Schaltmatrix mit dem zugehörigen Wellenlängenumsetzer verbunden ist und
- die von der Ausgangsstufe abgegebenen optischen Signale mit jeweils untereinander unterschiedlichen Wellenlängen über einen Wellenlängenmultiplexer MUX dem Ausgangswellenleiter zuführbar sind.

## Claims

1. Switching matrix for freely selectively switching through optical signals which are received on waveguides and have a given wavelength λ₁ .. λₘ onto output waveguides A1..AN, in which matrix
- the optical signals which are received on the waveguides can be switched through in the direction of a desired output waveguide via a multi-stage space division multiplex switching arrangement,
- the space division multiplex switching arrangement having an input stage ST 1 and an output stage ST 3,
- a plurality of optical signals which are output by the output stage and are switched through in the direction of the output waveguide can be converted in a signal-specific wavelength converter λᵢ/λₗ .. λᵢ/λₘ into optical signals with fixed wavelengths which are different from one another,
characterized
- in that the input stage is formed with 1-x-m switching elements whose outputs can be switched independently of one another, and
- an incoming optical signal with exactly one wavelength is fed to the terminal, designated by "1", of a 1-x-m switching matrix.

2. Switching matrix according to Claim 1, **characterized in that** a space division multiplex switch of a central stage is connected on the input side to the input stage and on the output side to the output stage.

3. Switching matrix according to Claim 1 or 2, **characterized in that** a 1-x-m switching matrix and/or the space division multiplex switch is formed with a plurality of driveable semiconductor amplifier switches.

4. Switching matrix according to one of the preceding claims, characterized
- in that a plurality of optical signals with wavelengths which are different from one another are received on an input waveguide E1..EN, and
- in each case an optical signal with exactly one wavelength can be fed to a plurality of 1-x-m switching matrices via a wavelength demultiplexer WID connected to this input waveguide.

5. Switching matrix according to one of the preceding claims, **characterized in that**
- the output stage is formed with m-x-1 switching matrices,
- the terminal, designated by "1", of an m-x-1 switching matrix is connected to the associated wavelength converter, and
- the optical signals which are output by the output stage and in each case have wavelengths which are different from one another can be fed to the output waveguide via a wavelength multiplexer MUX.

## Revendications

1. Matrice de connexion pour la commutation optionnelle de signaux optiques, arrivant sur des guides d'ondes et de longueurs d'ondes données λ₁ à λₘ, sur des guides d'ondes de sortie A1 à AN, dans laquelle
- les signaux optiques arrivant sur les guides d'ondes sont commutés par l'intermédiaire d'un réseau de connexion spatial à plusieurs étages en direction d'un guide d'ondes de sortie souhaité,
- le réseau de connexion spatial comporte un étage d'entrée ST 1 et un étage de sortie ST 3,
- plusieurs signaux optiques délivrés par l'étage de sortie et commutés en direction du guide d'ondes de sortie peuvent être transformés, dans un transformateur de longueur d'onde propre au signal λᵢ/λ₁ à λᵢ/λₘ, en signaux optiques de longueurs d'ondes fixes différentes les unes des autres,
**caractérisée par** le fait que
- l'étage d'entrée est formé par des éléments de commutation 1-x-m dont les sorties sont commutables indépendamment les unes des autres, et
- un signal optique arrivant avec exactement une longueur d'onde est envoyé à la borne désignée par "1" d'une matrice de commutation 1-x-m.

2. Matrice de connexion selon la revendication 1,
**caractérisée par** le fait qu'un commutateur spatial d'un étage central est relié côté entrée à l'étage d'entrée et côté sortie à l'étage de sortie.

3. Matrice de connexion selon la revendication 1 ou 2,
**caractérisée par** le fait qu'une matrice de commutation 1-x-m et/ou le commutateur spatial sont formés par plusieurs commutateurs amplificateurs à semiconducteurs commandables.

4. Matrice de connexion selon l'une des revendications précédentes,
**caractérisée par** le fait que
- plusieurs signaux optiques ayant des longueurs d'ondes différentes les unes des autres arrivent sur un guide d'ondes d'entrée E1 à EN, et
- un signal optique ayant exactement une longueur d'onde peut être envoyé respectivement par l'intermédiaire d'un démultiplexeur de longueur d'onde WID relié à ce guide d'ondes d'entrée à plusieurs matrices de commutation 1-x-m.

5. Matrice de connexion selon l'une des revendications précédentes,
**caractérisée par** le fait que
- l'étage de sortie est formé par des matrices de commutation m-x-1,
- la borne désignée par "1" d'une matrice de commutation m-x-1 est reliée au transformateur de longueur d'onde associé, et
- les signaux optiques délivrés par l'étage de sortie et ayant des longueurs d'ondes à chaque fois différentes les unes des autres peuvent être envoyés par l'intermédiaire d'un multiplexeur de longueur d'onde MUX au guide d'ondes de sortie.
